Europäisches Patentamt

European Patent Office

Office européen des brevets

(11) Publication number: **0 189 207**
A2

(12) # EUROPEAN PATENT APPLICATION

(21) Application number: **86100935.5**

(22) Date of filing: **24.01.86**

(51) Int. Cl.⁴: **F 25 D 11/04**

(30) Priority: **24.01.85 IT 4570285**

(43) Date of publication of application: **30.07.86**
**Bulletin 86/31**

(84) Designated Contracting States: **AT BE CH DE FR GB IT LI LU NL SE**

(71) Applicant: **Zanussi Elettrodomestici S.p.A., Via Giardini Cattaneo, 3, I-33170 Pordenone-C.P. 147 (IT)**

(72) Inventor: **Besson, Duilio, Via Svevo 1, I-33170 Pordenone (IT)**
Inventor: **De Marco, Claudio, Via Ponte del Vado 39, I-33084 Cordenons, Pordenone (IT)**

(74) Representative: **Patentanwälte Grünecker, Kinkeldey, Stockmair & Partner, Maximilianstrasse 58, D-8000 München 22 (DE)**

(54) **Freezer with means for indicating the duration of conservability of articles.**

(57) A freezer comprises a freezing compartment and a refrigerant circuit of the automatic control type and is provided with a selector unit adapted to supply a comparator with at least one parameter corresponding to the nature of a respective article within the freezing compartment. Control means are provided for determining the time required for freezing the respective article and for supplying a corresponding second parameter to the comparator.

The comparator controls a display unit in response to the coincidence of the said parameters by means of a signal representative of the conservability of the frozen article.

ACTORUM AG

# 1  Description

The present invention relates to a freezer apparatus, or a refrigerator provided with a freezer compartment, in particular of the domestic type, equipped with means for indicating the period of conservability of different goods stored therein.

As generally known, domestic freezers and similar apparatus are usually of the automatic control type, and are generally supplied together with instruction tables or manuals indicating the maximum period of conservability, as calculated from the time of freezing, of foods of different nature and/or dimensions. These indications are of necessity only approximative, as they do not take into account, for instance, the actual mass of the foods to be frozen and the time required for freezing such foods. These parameters exert a substantial influence on the conservability of different foods so stored as determined by the loss of specific organic, bromatologic and bacteriologic characteristics and the like of the foods.

A main object of the invention is the provision of a freezer provided with means for indicating the period of conservability of various goods taking into account the most significant parameters influencing the conservability.

Another object of the invention is the provision of a freezer of the type defined above provided with indicator means adapted to automatically determine these parameters and to quantify them in the most accurate manner.

These objects are attained according to the invention by a freezer having means for indicating the period of conservability of goods of different nature, comprising a freezing compartment for the goods and an automatically controlled refrigerant circuit, and mainly characterized by additionally comprising manually operable selector means adapted to supply comparator means with at least a first encoded parameter corresponding to the nature of an associated article in said compartment, and control means adapted to determine the time required for cooling said article to the freezing temperature and to supply a corresponding second encoded parameter to said comparator means, the latter being adapted to supply indicator means with at least one encoded signal indicative of the period of conservability of said article in response to the coincidence of said first and said second parameters.

The characteristics and advantages of the invention will become more clearly evident from the following description, given by way of example with reference to the accompanying drawings, wherein:

fig. 1 shows a simplified perspective view of a freezer according to the invention,

fig. 2 shows the variations over time of the temperature T within the freezer of fig. 1,

fig. 3 shows a block diagram illustrating the principle of operation of indicator means provided in the freezer according to the invention, and

fig. 4 shows a block diagram of a preferred embodiment of indicator means provided in the freezer of fig. 1.

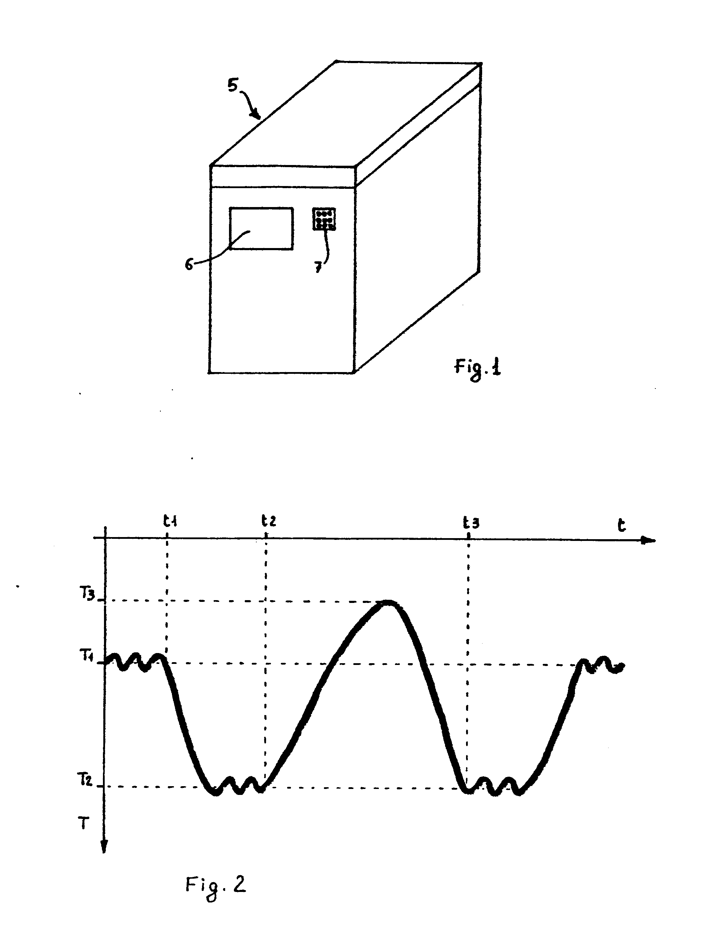

With reference to fig. 1, the freezer according to the invention is generally designated 5 and comprises a refrigerant circuit of the compressor type, the evaporator of which is to be understood to be located in a freezing compartment. The refrigerating circuit is not shown for simplity's sake and is to be understood to be associated with known commutator controls (thermostatic and/or time-based) for automatically switching between freezing phases and conservation phases for the storage of different foods.

More precisely, and with reference to fig. 2, the refrigerant circuit is normally operated, under control of a first thermostatic device, at alternating cycles of energization and deenergization of the compressor so as to maintain the temperature within the freezing compartment approximately at a value T1, for example -18 °C for the conservation and storage of already frozen articles. For deep-freezing an additional charge of foods, the refrigerant circuit may be manually activated, for example at the time t1, for lowering the temperature within the freezer to a deep-freezing temperature T2 of for example -28 °C.

The temperature T2 is automatically maintained under the control of a second thermostatic device, and its attainment can be indicated to the user in a known manner.

When the freezing temperature T2 has been thus attained, for example at a time t2, the foods to be frozen, which are of course at ambient temperature, may be charged into the freezer. As a result, the temperature within the freezing compartment tends to rise, irrespective of the activation of the refrigerant circuit, to a maximum value T3, whereupon, as the thermic inertia of the newly charged foods is exhausted, the temperature again drops to the freezing temperature T2, which may for instance be attained at a time t3. At this time, the temperature is thermostatically controlled at the value T2 for a certain period, whereupon the refrigerant circuit is again controlled by the first thermostatic device. As a result, the temperature within the freezer gradually rises to the conservation or storage value T1, which is then maintained in the manner explained above.

The means for accomplishing the described operation do not form part of the invention and shall not be described in detail, as they are of a conventional type normally employed in numerous commercially available freezer apparatus, as already mentioned.

The present invention is based on the recognition that the maximum period of conservability of frozen foods is inversely proportional to the interval between times t3 and t2, which may vary on the base of a number of variables in each individual case. In particular, the interval t3-t2 is determined by the mass, the nature and the initial temperature of the foods to be deep-frozen, and additionally by the charging conditions, the ambient temperature and, to a significant degree, by the operating efficiency of the freezer apparatus.

The measurement of the interval t3-t2 thus furnishes a first significant parameter which, in combination with the known conservability characteristics of foods of different nature, is indicative of the maximum possible storage time of the foods.

The freezer apparatus according to the invention is therefore provided with means for measuring the time interval t3-t2 and means for comparing the result of this measurement with the characterizing data of respective foods and for generating a resultant indication of the conservability of such foods. This indication may be conveyed to the user by means of a display device 6 mounted on the housing of the freezer (fig. 1), while the characteristics of the foods may be manually encoded by means of a push-button selector unit 7 or the like.

The skilled artisan will be aware that the above described functions may be accomplished in various manners.

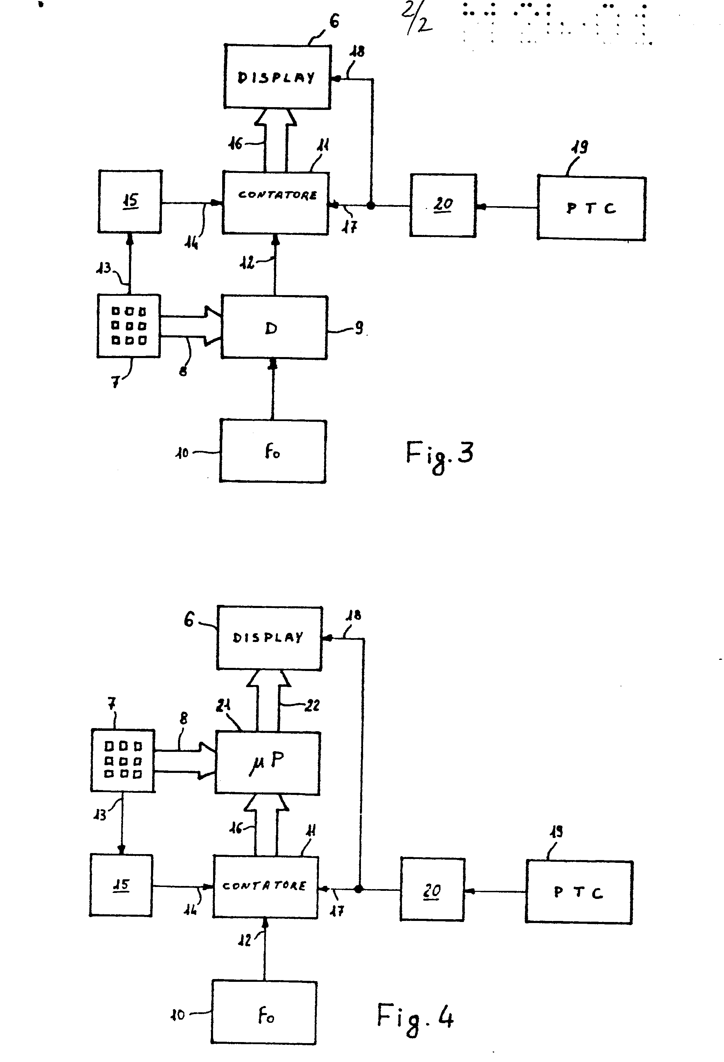

In the elementary case depicted in fig. 3, for example, selector unit 7 has a plurality of outputs generally indicated at 8 adapted to provide respective encoded signals, or parameters, when an associated push-button of selector unit 7 is actuated. Each push-button is associated to a specific parameter representative of the nature of a respective article.

The outputs 8 are connected to corresponding inputs of a programmable frequency divider 9 which is supplied by a generator 10, for example an astable multivibrator, with a signal having a reference frequency fo, the output signal of frequency divider 9 being applied to the counting input 12 of a counting stage 11. The signal thus applied to the input of counting stage 11 is of a frequency which varies as a function division ratio of divider 9 in response to the actuation of a specific push-button of selector unit 7. In a per se known manner, the actuation of any push-button additionally causes selector unit 7 to generate a logic enable signal at a further output 13. This signal is applied to a reset input 14 of counter stage 11 via a switching device 15, for instance an electronic circuit breaker or a relay.

Counter 11 has a plurality of outputs 16 connected to display unit 6. Counter 11 further has a control input 17 adapted to lock the counting signals at outputs 16 in response to the presence of a logic level "1". Display unit 6 correspondingly has an enable input 18 adapted to permit the counting result of counter 11 to be displayed in response to the presence of a logic level "1". The two named inputs 17 and 18 are connected to an output of a thermic probe 19, comprising for example a thermistor P.T.C., through a locking device 20, for instance a comparator. In particular, probe 19 and locking device 20 are adapted to apply a logic level "1" to inputs 17 and 18 unly when probe 19, which is mounted in the freezing compartment, senses the freezing temperature T2. In order to simplify the description, the means for powering the various components are not depicted in fig. 3.

Keeping in mind that the association of the various parameters to corresponding push-buttons of selector unit 7 can be readily accomplished by those skilled in the art on the base of scientifically established data regarding the variable conservability of foods of different nature, the mode of operation of the indicator device of fig. 3 is readily evident.

After an article to be frozen has been introduced into the freezer 5, and the push-button of selector unit 7 corresponding to the nature of the article has been actuated, counter 11 is enabled to count the pulses received at input 12. The value of the counting frequency is proportional to that of the reference frequency of generator 10 and varies as a function of the parameter appearing at the outputs 8 of selector unit 7 and determining the division ratio of stage 9. As already explained above, probe 19 meanwhile senses a temperature above the value T2, as a result of which a logic level "0" is applied to inputs 17 and 18 of counter 11 and display unit 6, respectively, so that display unit 6 is disabled.

At the time t3, probe 19 senses the freezing temperature T2 of the article introduced into the freezer, as a result of which the logic level "1" is applied to inputs 17 and 18 for locking the operation of counter 11 and for enabling display unit 6, respectively. The latter thereupon displays an encoded indication, for instance a number of months, representative of the maximum period of conservability of the frozen article. This indication takes into account the nature of the article (thanks to the actuation of selector unit 7) and the actual conditions of the freezing operation (thanks to the employ of probe 19).

It is of course also possible to deep_freeze foods of different nature at the same time. Also in this case the operation of the freezing apparatus according to the invention is substantially the same as described above with reference to fig. 2.

In particular, two or more foods of different nature may simulatneously attaine the freezing temperature T2 at the time t3. The maximum period of conservability of the different foods will then be different, however, depending on their different nature. It is thus necessary, with reference to fig. 3, to provide a plurality of selector units 7, frequency dividers 9, counters 11 and display units 6, corresponding to the number of foods of different nature to be frozen at the same time, for indicating the period of conservability of each of the different foods to be frozen.

The circuitry modifications required for this purpose are readily accomplished by the skilled artisan, and the operation of the indicator device is the same as described above with reference to fig. 3.

It is preferably, though, to design the indicator device of the freezer apparatus according to the invention in the manner depicted in fig. 4.

The indicator device of fig. 4 comprises all of the basic components of the embodiment shown in fig. 3, which are therefore designated by the same reference numerals.

In contrast to the indicator device of fig. 3, the generator 10 in the preferred embodiment is adapted to directly control counter 11, optinally via a fixed frequency divider (not shown), the counting outputs 16 of counter 11 being connected to respective inputs of a microprocessor 21 which may for example be of the type 8086 sold by Intel Corporation.

Microprocessor 21 has a further group of inputs connected to repective outputs 8 of selector unit 7, and a number of outputs 22 connected to display unit 6, which may for example be of the type DL 3422 sold by Siemens.

Microprocessor 21 may be pre-programmed in a per se known manner for generating encoded signals representative of the conservability of different articles in response to the coincidence of at least one first parameter appearing at the outputs 8 of selector unit 7 with a second parameter appearing at the outputs 16 of counter 11.

In particular, at the outputs 8 of selector unit 7 there appears a number of encoded parameters corresponding to the number of push-buttons of selector unit 7 that have been actuated in accordance with the number of different articles to be frozen. At outputs 16, on the other hand, there appears a second encoded parameter corresponding to the time interval t3-t2 required for freezing the charged articles, as already explained.

The microprocessor 21 practically functions as a matrix for supplying at its outputs 22 a different signal for each push-button of selector unit 7 that has been actuated, these signals being representative of the maximum period of conservability of the different articles as a function of the above mentioned second parameter. The display unit 6 then simultaneously indicates the maximum conservability period for each of the frozen articles.

It is thus evident that the device of fig. 4 operates substantially in the same manner as that of fig. 3, with the difference that the foods of different nature are not encoded by assigning to each one thereof a corresponding frequency measured by the counter measn 11 for a period of time established by the probe 19, instead of which the parameters corresponding to the different foods are directly combined in a matrix with the output of counter 11.

As already said, the described freezer apparatus may be subjected to numerous modification without thereby leaving the purview of the present invention as defined by the characteristics set forth in the claims.

The display unit 6 may for example be of a different type instead of an optical display, or the temperatures at the beginning and/or at the end of the freezing process may be adjusted to different levels as required.

0189207

Zanussi Elettrodomestici S.p.A.
Via Giardini Cattaneo, 3
33170 Pordenone-C.P. 147
I t a l y

Freezer with Means for Indicating the
Duration of Conservability of Articles

Patent Claims:

1.     A freezer having means for indicating the duration
of conservability of articles of different nature, comprising a freezing compartment for receiving the articles and
a refrigerant circuit of the automatic control type,
characterized by further comprising manually operable
selector means (7) for supplying comparator means with at
least one first encoded parameter corresponding to the
nature of a respective article within said compartment,
and control means operable to determine the time (t3-t2)
required for cooling said article to the freezing temperature (T2) and to supply a corresponding second encoded
parameter to said comparator means, the latter being operable to supply display means (6) with at least one encoded
signal representative of the period of conservability of said article in response to the coincidence of said first and second parameters.

2. A freezer according to claim 1, characterized in that said comparator means comprise a microprocessor (21) having first inputs (8) adapted to have said first parameter applied thereto by said selector means (7), and second inputs (16) adapted to have said second parameter applied thereto by said control means, said microprocessor further having a plurality of outputs (22) adapted to apply said encoded signal to said display means (6).

3. A freezer according to claim 2, characterized in that said control means comprise counter means (11) adapted to have a reference frequency (fo) applied thereto by a generator (10) and connected to said second inputs (16) of said microprocessor (21), a thermic sensor (19) disposed in said freezing compartment being adapted to control said counter means (11) with a counting lock signal in response to sensing said freezing temperature (T2).

4. A freezer according to claim 1, characterized in that said control means comprise counter means (11) adapted to have a reference frequency applied thereto by a respective generator (10) and connected to said display means (6), a thermic sensor (19) disposed in said freezing compartment being adapted to control said counter means (11) with a counting lock signal in response to sensing said freezing temperature (T2).

5. A freezer according to claim 4, characterized in that said comparator means comprise a programmable frequency divider (9) by way of which said generator (10) controls said counter means (11) and having a control input (8) adapted to have said first encoded parameter applied thereto by said selector means (7).

Fig. 1

Fig. 2

Fig. 3

Fig. 4